Europäisches Patentamt

**European Patent Office**

**Office européen des brevets**

(11) Publication number: **0 125 918**

**A2**

## EUROPEAN PATENT APPLICATION

(21) Application number: **84303251.7**

(22) Date of filing: **14.05.84**

(51) Int. Cl.³: **B 62 D 5/04**

(30) Priority: **17.05.83 GB 8313533**

(43) Date of publication of application:
**21.11.84 Bulletin 84/47**

(84) Designated Contracting States:
**DE FR GB IT NL SE**

(71) Applicant: **Wiles, John**
**37 Fishponds Road**
**Kenilworth Warwickshire CV8 1EY(GB)**

(71) Applicant: **Hems, Colin Edward**
**44 Meadowbrook Road**
**Northfield Birmingham B31 1ND(GB)**

(72) Inventor: **Wiles, John**
**37 Fishponds Road**
**Kenilworth Warwickshire CV8 1EY(GB)**

(72) Inventor: **Hems, Colin Edward**
**44 Meadowbrook Road**
**Northfield Birmingham B31 1ND(GB)**

(74) Representative: **Prutton, Roger et al,**
**Marks & Clerk Alpha Tower Suffolk Street Queensway**
**Birmingham B1 1TT(GB)**

(54) **Power operated or power assisted vehicle steering system.**

(57) A power operated or power assisted vehicle steering system makes use of a face-plate type a.c. induction motor 11, 12 as an actuator. Alternating current is applied to the winding of this motor under driver control, for example by a transducer sensitive to steering wheel rotation.

FIG.I.

EP 0 125 918 A2

Croydon Printing Company Ltd.

## POWER OPERATED OR
## POWER ASSISTED VEHICLE STEERING SYSTEM

This invention relates to a power operated or power assisted vehicle steering system.

Conventional power operated or power assisted steering systems for road vehicles incorporate hydraulic, pneumatic, vacuum or electrical actuators which are used to provide the forces necessary for moving the steerable wheels of the vehicle. Generally speaking, these actuators put a considerable drag load on the vehicle steering when the power operated or power assisting system is out of operation. It is an object of the invention to provide a power-operated or power-assisted steering system in which the problem of actuator drag is overcome.

In accordance with the invention a power-operated or power assisted steering system includes an a.c. induction motor as an actuator and means for applying alternating current to the winding of such motor under the control of the vehicle driver.

The motor is preferably of the face plate type, the disc of which is attached to a rotatable part of the vehicle steering mechanism such as the steering shaft itself. Alternatively, the disc may be coupled to the steering shaft by reduction gearing so that the reaction disc rotates more rapidly than the steering shaft.

The invention is of particular utility in the conversion of conventional road vehicles with manual steering for use by disabled persons. Attachment of the induction motor to the vehicle to apply torque to the steering shaft is relatively easily accomplished and the supply of alternating current may either be controlled by a suitable transducer on the steering column for power assistance, or by a quite separate control device for complete power operation.

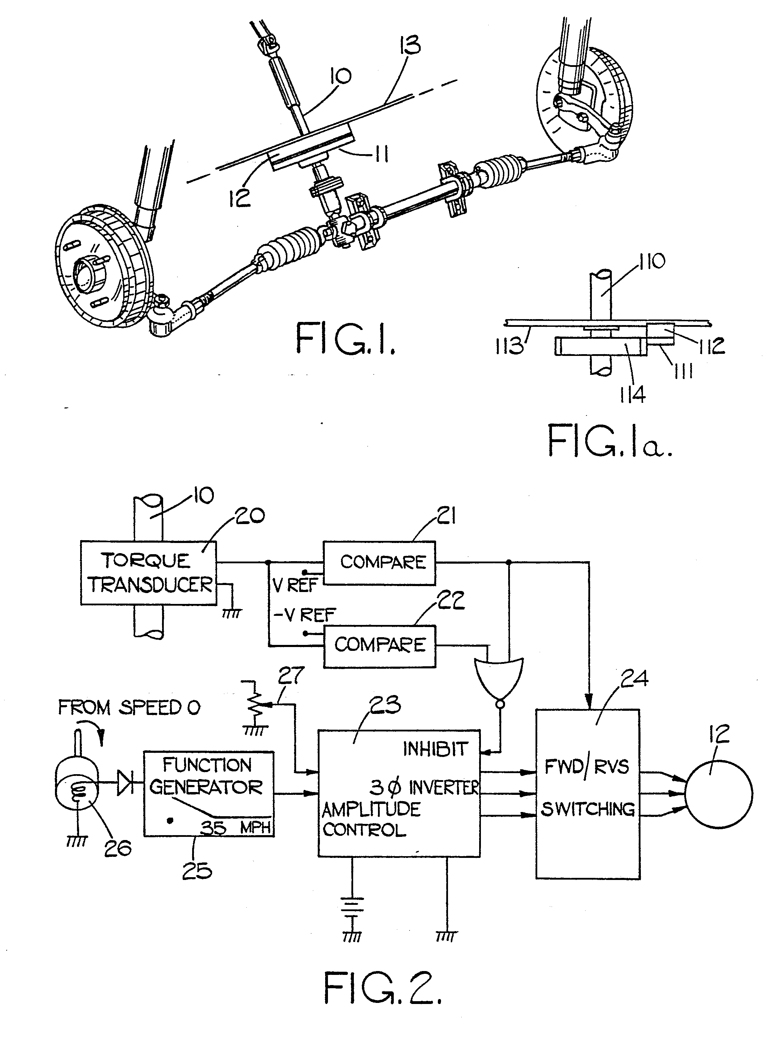

The accompanying drawing Figure 1 is a fragmentary perspective view of an example of a vehicle steering mechanism in accordance with the invention,

Figure 1a is a fragmentary view of a modified form of the invention, and

Figure 2 is a diagram showing a control system for a motor included in Figure 1.

The steering shaft 10 has a reaction disc 11 of an a.c. inductor motor attached directly to it. The winding structure 12 of the motor is securely mounted on a fixed bulkhead or bracket 13 forming part of the vehicle body structure.

Alternating current is supplied to the winding structure 12 under the control of the vehicle driver. Where only power assistance is required the a.c. supply is controlled by a transducer device sensitive to turning of the shaft 10.

As shown in Figure 2 the transducer used is a torque transducer 20 incorporated in the steering shaft 10. Such torque transducer may be of any well-known type which is capable of transmitting the steering shaft torque encountered in normal non-assisted steering with little lost-motion. The output of the torque transducer 20 is applied to two comparator circuits 21, 22 which produce outputs when the torque transducer output signal is respectively above a positive threshold voltage and below a negative threshold voltage. An NOR gate 22 has inputs from the two comparators and its own output is supplied to an inhibit input of a three phase static inverter circuit 23. The output of one of the comparators 21 is connected to a forward/reverse switching circuit 24 which connects the output of the inverter 23 to the motor winding 12. Such forward/reverse switching is well known to those skilled in the art and need not be described herein.

The inverter 23 has an amplitude control which receives an input from a function generator 25 operating on the rectified output signal of a stepper motor 26 driven by the speedometer drive of the vehicle. The function generator 25 provides an output which is maximum when the vehicle is at rest but reduces substantially linearly to zero at 35 mph and remains at zero for higher speeds. The output of the stepper motor varies substantially linearly with speed and it thus provides a cheap speed transducer. The function generator 25 is a simple circuit which would be readily provided by one skilled in the art.

With the arrangement described above, the transducer 20, detects turning of the shaft 10 and causes the motor 12 to be energised in the appropriate direction to provide the required power assistance which is maximum when the vehicle is at rest but reduces as the vehicle speeds up.

In the modification shown in Figure 1a the motor is a smaller one of the same type with its disc 111 toothed to mesh with a gear 114 on the steering shaft 110. Such a motor, being connected to the steering shaft by reduction gearing, need produce less torque than the direct drive motor 111, 112 of Figure 1 and hence requires less current.

If desired the control may also include a manual control 27 for varying the signal applied to the amplitude control input of the inverter 23, to enable the driver to select the level of torque applied by the motor.

The vehicle steering can be used normally with the power assistance disabled without any significant drag load being put on the steering mechanism, since there is no actual mechanical connection between the steering and the motor. Similarly, if a control device separate from the steering column is used to control the a.c. supply to the motor for full power steering, the vehicle can still be driven normally without any disadvantage.

CLAIMS

1.A power operated or power assisted steering system for a vehicle having a steering shaft, comprising an a.c. induction motor mounted on the vehicle and drivingly connected to the steering shaft, and means for applying alternating current to the motor winding under the control of the vehicle driver.

2. A steering system as claimed in claim 1 in which the motor is a face-plate type disc motor.

3. A steering system as claimed in claim 2 in which the motor disc is directly mounted on the steering shaft.

4. A steering system as claimed in claim 2 in which the motor disc is coupled to the steering shaft by reduction gearing.

5. A steering system as claimed in claim 2 in which said means for applying alternating current to the motor winding comprises a static inverter.

6. A steering system as claimed in claim 5 further comprising means sensitive to the vehicle speed for reducing the inverter output amplitude as vehicle speed increases.

7. A steering system as claimed in claim 2 comprising transducer means sensitive to turning of the steering shaft and control means determining the direction of drive of said motor under the control of said transducer means.

0125918

1/1

FIG.1.

FIG.1a.

FIG.2.